# EUROPEAN PATENT APPLICATION

(11) **EP 4 832 550 A1**
(43) Date of publication of application: **28.10.2026**
(21) Application number: 24910756.6
(22) Date of filing: 12.12.2024
(51) Int. Cl.: H04W 24/02

(54) **SENSING AND COMMUNICATION METHOD, SENSING AND COMMUNICATION SYSTEM, ELECTRONIC DEVICE AND STORAGE MEDIUM**

(30) Priority: 29.12.2023 CN 202311869832
(71) Applicant: ZTE Corporation, Shenzhen, Guangdong 518057 (CN)
(72) Inventor: LIU, Xiangfeng, Shenzhen, Guangdong 518057 (CN); LI, Ping, Shenzhen, Guangdong 518057 (CN); REN, Kaijun, Shenzhen, Guangdong 518057 (CN); WEI, Hao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/138876
(87) International publication number: WO 2025/139825

(57) **Abstract**

The present disclosure provides a sensing and communication method, a sensing and communication system, an electronic device and a storage medium. The method is applied to a core network, and the core network comprises a sensing function entity and a sensing server. The method comprises: receiving first sensing data sent by a sensing node; and on the basis of a first artificial intelligence model trained by the sensing server, and by means of the sensing function entity, processing the first sensing data to obtain a first sensing result.

## Description

The present disclosure claims a priority to Chinese Patent Application No. 202311869832.2, filed on December 29, 2023, the entire content of which is incorporated herein by reference.

### TECHNICAL FIELD

The present disclosure relates to the field of communication technologies, and in particular, to a sensing and communication method, a sensing and communication system, an electronic device, and a storage medium.

### BACKGROUND

With the widespread application of the 5th generation (5G) communication system, while satisfying the needs of individual users, 5G is gradually penetrating into various industries and fields of society, thereby realizing the upgrade from consumption to industrial applications. Herein, an artificial intelligence-based sensing and communication system, based on existing network architectures and communication waveforms, uses existing communication devices to implement sensing applications, which promotes the development of innovative application services, and is an important research direction of 5G.

### SUMMARY

In a first aspect, a sensing and communication method is provided, applied to a core network, where the core network includes a sensing function entity and a sensing server. The method includes:
receiving first sensing data sent from a sensing node; and
processing, by the sensing function entity, the first sensing data based on a first artificial intelligence model trained by the sensing server, to obtain a first sensing result.

In a second aspect, a sensing and communication method is provided, applied to a sensing node. The method includes:
receiving a first sensing control instruction sent from a sensing function entity in a core network, where the first sensing control instruction is used to instruct the sensing node to perform sensing detection;
in response to the first sensing control instruction, sending a first sensing signal, and acquiring first sensing data; and
sending the first sensing data to the sensing function entity in the core network.

In a third aspect, a sensing and communication method is provided, applied to an intelligent agent in an edge network. The method includes:
acquiring second sensing data from a sensing node; and
processing the second sensing data based on a second artificial intelligence model, to obtain a second sensing result.

In a fourth aspect, a sensing and communication system is provided, the sensing and communication system includes: a sensing node and a core network, where the core network includes a sensing function entity and a sensing server;
the sensing node is configured to provide first sensing data to the core network;
the core network is configured to process first sensing data, by the sensing function entity, based on a first artificial intelligence model trained by the sensing server, to obtain a first sensing result.

In a fifth aspect, a communication apparatus is provided, and includes: a memory and a processor; the memory is coupled with the processor; the memory is configured to store a computer program; and the processor, upon executing the computer program, implements the sensing and communication method described in any one of the above aspects or embodiments.

In a sixth aspect, a computer readable storage medium is provided and the computer readable storage medium has stored computer program instructions thereon, and the computer program instructions, upon being executed by a processor, implement the sensing and communication method described in any one of the above aspects or embodiments.

In a seventh aspect, a computer program product is provided, the computer program product includes computer program instructions, and the computer program instructions, upon being by a processor, implement the sensing and communication method described in any one of the above aspects or embodiments.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is a schematic diagram of a sensing scenario provided by some embodiments of the present disclosure.
FIG. 2 is a schematic diagram of an architecture of a sensing and communication system provided by some embodiments of the present disclosure.
FIG. 3 is a flow schematic diagram of a model training method provided by some embodiments of the present disclosure.
FIG. 4 is a flow schematic diagram of a sensing and communication method provided by some embodiments of the present disclosure.
FIG. 5 is a schematic diagram of a range-Doppler map provided by some embodiments of the present disclosure.
FIG. 6 is a schematic diagram of a correspondence of feature data provided by some embodiments of the present disclosure.
FIG. 7 is a schematic diagram of an architecture of a convolutional neural network provided by some embodiments of the present disclosure.
FIG. 8 is a structural schematic diagram of a long short term memory neural network model provided by some embodiments of the present disclosure.
FIG. 9 is a structural schematic diagram of another long short term memory neural network model provided by some embodiments of the present disclosure.
FIG. 10 is a flow schematic diagram of another sensing and communication method provided by some embodiments of the present disclosure.
FIG. 11 is a flow schematic diagram of yet another sensing and communication method provided by some embodiments of the present disclosure.
FIG. 12 is a flow schematic diagram of yet another sensing and communication method provided by some embodiments of the present disclosure.
FIG. 13 is a flow schematic diagram of yet another sensing and communication method provided by some embodiments of the present disclosure.
FIG. 14 is a flow schematic diagram of yet another sensing and communication method provided by some embodiments of the present disclosure.
FIG. 15 is a flow schematic diagram of yet another sensing and communication method provided by some embodiments of the present disclosure.
FIG. 16 is a structural schematic diagram of a sensing and communication apparatus provided by some embodiments of the present disclosure.
FIG. 17 is a structural schematic diagram of another sensing and communication apparatus provided by some embodiments of the present disclosure.
FIG. 18 is a structural schematic diagram of yet another sensing and communication apparatus provided by some embodiments of the present disclosure.
FIG. 19 is a structural schematic diagram of a communication apparatus provided by some embodiments of the present disclosure.

### DETAILED DESCRIPTION

The technical solutions in the present disclosure will be described clearly and completely below, in conjunction with the drawings in the present disclosure, and obviously, the described embodiments are merely a part of the embodiments of the present disclosure, not all of the embodiments. Based on the embodiments in the present disclosure, all other embodiments obtained by those ordinary skilled without creative efforts shall fall within the protection scope of the present disclosure.

It should be noted that in the present disclosure, the words such as "exemplary/exemplarily" or "for example (e.g.)", etc., are used to present an example, illustration, or explanation. Any embodiment or design scheme described with "exemplary/exemplarily" or "for example (e.g.)" in the present disclosure should not be construed as preferred or advantageous over other embodiments or design schemes. Rather, the usage of words such as "exemplary/exemplarily" or "for example (e.g.)" is intended to present relevant concepts in an exemplary manner.

Hereinafter, the terms such as "first", "second", etc., are used only for descriptive purposes and cannot be construed as indicating or implying relative importance or implicitly indicating the number of the indicated technical features. Thus, features defined with "first" or "second", etc., may explicitly or implicitly include one or more of the features.

In the description of the present disclosure, unless otherwise specified, the character "/" means "or"; and for example, A/B may mean A or B. Herein, "And/or" is merely an association relationship for describing associated objects, which represents that there may be three kinds of relationships. For example, A and/or B may represent three cases: only A, only B, and both A and B. In addition, "at least one" means one or more, and "multiple/plurality of" means two or more.

The method provided in the embodiments of the present disclosure may be applied to various communication systems. For example, the communication system may be a 5G communication system, a wireless fidelity (Wi-Fi) system, a 3rd generation partnership project (the 3rd Generation Partnership Project, 3GPP) related communication system, a future evolved communication system (such as 6G, etc.,), a system integrating multiple systems, etc., which are not limited to the embodiments of the present disclosure.

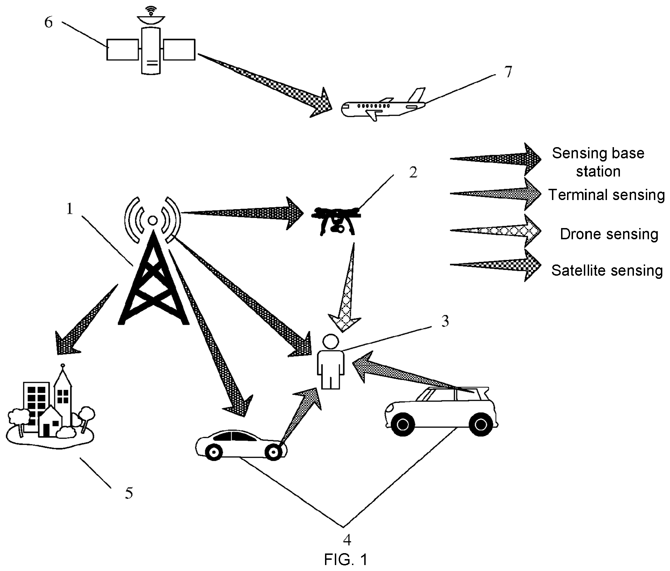

With the wide application of 5G, while satisfying the needs of individual users, 5G is gradually penetrating into various industries and fields of society, thereby realizing the upgrade from consumption to industrial applications. Integrated sensing and communication, based on existing network architectures and communication waveforms, uses existing communication devices to implement sensing applications, which promotes the development of innovative application services, and is an important research direction of 5G. As shown in FIG. 1, FIG. 1 is a schematic diagram of a sensing scenario provided in the embodiments of the present disclosure, a sensing system in a sensing base station 1 may perform base station sensing on a drone 2, a human body 3, a vehicle 4, and a building 5; a sensing system in a satellite 6 may perform satellite sensing on an aircraft 7 (shown as an airplane); a sensing system in the drone 2 may perform drone sensing on the human body; and a sensing terminal in the vehicle 4 may perform terminal sensing on the human body 3.

In some embodiments, the terminal that performs terminal sensing may also be a device with full-duplex transmission capability. The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In the sensing functions currently applied, since network scales, service types, and terminal devices of future mobile communication systems, such as the 6th generation (6G) communication system, are more complex and diverse, the communication range expands, connections are complex, and information interaction increases, which pose high requirements on sensing, intelligent management of integrated sensing and communication is an inevitable trend. However, the existing sensing and communication systems are basically systems with separated communication and sensing, which heavily rely on expert communication experience and sensing optimization algorithms. With the increase of parameters, network maintenance and optimization are relatively difficult.

In view of the above technical problem, the embodiments of the present disclosure provide a sensing and communication method, the concept of which is: a sensing function entity and a sensing server are newly added in the existing architecture of the core network, so that the core network itself also has intelligent computing capabilities, and through interactions among the core network, an intelligent agent located in an edge network, and a sensing node, sharing of sensing data and fusion of artificial intelligence models are implemented, which reduces the complexity of manual model training. Meanwhile, sensing data is processed based on a trained artificial intelligence model, to obtain a sensing result, so that the manner for acquiring the sensing result is more accurate and less prone to errors, facilitating data exposure to other modules in the system or third parties, so as to realize real-time communication of various modules in the sensing and communication system and complete sensing tasks.

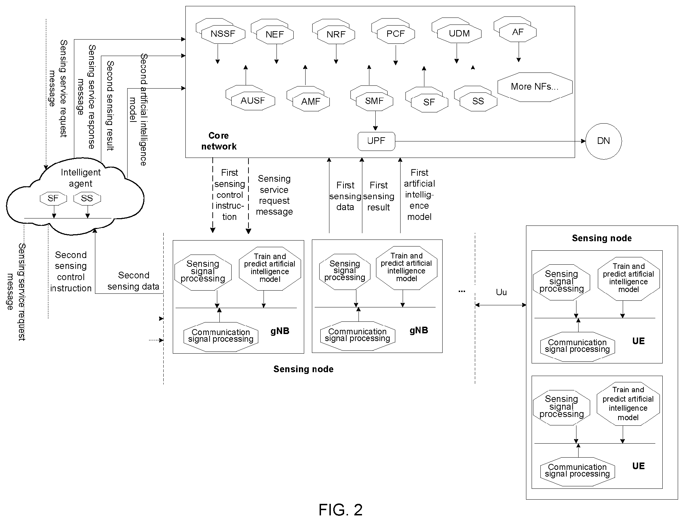

Referring to FIG. 2, FIG. 2 is a schematic diagram of an architecture of a sensing and communication system provided in the embodiments of the present disclosure. As shown in FIG. 2, the system includes: a sensing node and a core network.

In some embodiments, the sensing node is configured to provide first sensing data to the core network.

In some embodiments, the core network includes a sensing function entity (sensing function, SF) and a sensing server (SS), and is configured to process the first sensing data, by the sensing function entity, based on a first artificial intelligence model trained by the sensing server, to obtain a first sensing result.

In some embodiments, the sensing and communication system further includes an intelligent agent located in an edge network.

In some embodiments, the sensing node is configured to provide second sensing data to the intelligent agent.

In some embodiments, the intelligent agent includes a sensing function entity and a sensing server, and is configured to process the second sensing data based on a second artificial intelligence model, to obtain a second sensing result.

For example, the sensing server in the intelligent agent is configured to train the second artificial intelligence model, and the sensing function entity in the intelligent agent is configured to process the second sensing data based on the second artificial intelligence model, to obtain the second sensing result.

In some embodiments, the intelligent agent is further configured to send at least one of the following contents to the core network: a sensing service request message, a sensing service response message, second sensing data, a second sensing result, or the second artificial intelligence model.

In some embodiments, the core network is further configured to send at least one of the following contents to the intelligent agent: a sensing service request message, a sensing service response message, first sensing data, a first sensing result, or the first artificial intelligence model.

In some embodiments, the core network is further configured to send, in response to the sensing service request message, a first sensing control instruction to the sensing node.

The sensing service request message is sent from the intelligent agent located in the edge network to the core network; or the sensing service request message is generated by an application function network element in the core network, and the first sensing control instruction is used to instruct the sensing node to perform sensing detection.

For example, the core network is further configured to send, in response to the sensing service request message, the first sensing control instruction to the sensing node via the sensing function entity in the core network.

In some embodiments, the core network is further configured to receive at least one of the following contents sent from the intelligent agent located in the edge network: the sensing service request message, the sensing service response message, the second sensing data, the second sensing result, or the second artificial intelligence model.

The second sensing result is obtained by processing the second sensing data, by the sensing function entity in the intelligent agent, based on the second artificial intelligence model trained by the sensing server in the intelligent agent.

In some embodiments, the sensing function entity is configured with at least one of the following functions: a sensing control function, a sensing management function, an artificial intelligence function, a sensing processing function, or a data preprocessing function.

In some embodiments, the sensing control function includes at least one of: selection of a sensing node, management of a sensing resource, management of sensing time, management of an artificial intelligence application, or management of information transmission.

In some embodiments, the sensing management function includes at least one of: acquiring a sensing service requirement, authenticating the sensing service requirement, determining a sensing task based on the sensing service requirement, artificial intelligence model fusion, sensing data fusion, or sensing result fusion.

For example, the sensing management function, after acquiring the first artificial intelligence model sent from the sensing server of the core network and the second artificial intelligence model sent from the intelligent agent located in the edge network, fuses the first artificial intelligence model and the second artificial intelligence model, to obtain a more complete and more accurate artificial intelligence model.

For example, the sensing management function, after acquiring the first sensing data sent from the sensing node and the second sensing data sent from the intelligent agent located in the edge network, fuses the first sensing data and the second sensing data, to obtain more complete and more accurate sensing data.

For example, the sensing management function, after acquiring the first sensing result and the second sensing result sent from the intelligent agent located in the edge network, fuses the first sensing result and the second sensing result, to obtain a more complete and more accurate sensing result.

In some embodiments, the artificial intelligence function includes at least one of: training an artificial intelligence model, or using the artificial intelligence model.

In some embodiments, the sensing processing function is used for performing target detection, false alarm suppression, target association, trajectory tracking, target recognition, and trajectory correction on the sensing data.

In some embodiments, the data preprocessing function is used for performing extracting feature data or normalization processing on the sensing data.

In some embodiments, the sensing function entity is further configured to acquire a trained artificial intelligence model from the sensing server.

In some embodiments, the sensing function entity is further configured to process the sensing data based on the artificial intelligence model, to obtain a sensing result.

The sensing result is used for at least one of: target detection, trajectory tracking, trajectory correction, target association, or target recognition.

In some embodiments, the sensing function entity may also send a sensing control instruction to the sensing node, where the sensing control instruction is used to select a sensing node to perform a sensing task.

In some embodiments, the sensing function entity may also send at least one of following contents to the sensing server: first indication information for instructing the sensing server whether to perform model training, or second indication information for indicating a training period.

For example, the sensing control function in the sensing function entity sends at least one of the following contents to the sensing server: first indication information for instructing the sensing server whether to perform model training, or second indication information for indicating a training period.

In some embodiments, the core network is further configured to fuse acquired artificial intelligence models, so as to reduce the training complexity of large models.

In some embodiments, the core network further includes at least one of the following network elements: a network slice selection function (NSSF), a network exposure function (NEF), a network repository function (NRF), a policy control function (PCF), unified data management (UDM), an application function (AF), an authentication server function (AUSF), an access and mobility management function (AMF), a session management function (SMF), a user plane function (UPF), or other possible network functions (NFs).

In some embodiments, the NSSF virtualizes a plurality of end-to-end networks on a common hardware infrastructure through slicing technology, and each network has different NFs to adapt to different types of service requirements.

In some embodiments, the NEF is located between a 5G core network and an external third-party application function entity, and is responsible for managing the exposure of network data to the external. All external applications that want to access internal data of the 5G core network, must go through the NEF.

In some embodiments, the NRF is used for registration, management, and state detection of NFs, implementing automated management of all NFs. When each NF is started, it must register at the NRF to provide services, and registration information includes a type, an address, a service list, etc., of the NF.

In some embodiments, the PCF is used to manage network behaviors by using a unified policy framework, and to cooperate with user information in a unified data repository (UDR) to execute related policies.

In some embodiments, the UDM is used for managing user identifiers, subscription data, and authentication data, and also used for managing service network element registration of users.

In some embodiments, the AF refers to various services at the application layer, and the AF may be an application within an operator or a third-party AF (such as a video server, a game server). If the AF is an AF within the operator, the AF is in a trusted domain with other NFs and may directly interact with and access other NFs, while a third-party AF is not within the trusted domain and needs to access other NFs through the NEF.

In some embodiments, the AUSF is used to receive a request from the AMF for identity verification of user equipment (UE), request a key from the UDM, and then forward the key delivered by the UDM to the AMF for authentication processing.

In some embodiments, the AMF is used to provide session management message transmission channels for UEs and SMFs, and provide authentication and authorization functions and control plane access points for terminals and radio core network when users access.

In some embodiments, the SMF is used to support customized mobility management schemes together with the AMF, such as a mobile initiated connection only MICO) enhanced function or a radio access network (RAN) enhanced function.

In some embodiments, the UPF is mainly used to send service data of the UE to a data network (DN), data and service identification, action and policy execution, etc.

In some embodiments, the sensing server is used for training an artificial intelligence model, where the artificial intelligence model is used to process sensing data, to obtain a sensing result.

In some embodiments, the training of the artificial intelligence model may adopt a manner of offline training and online prediction, or a manner of online training and online prediction.

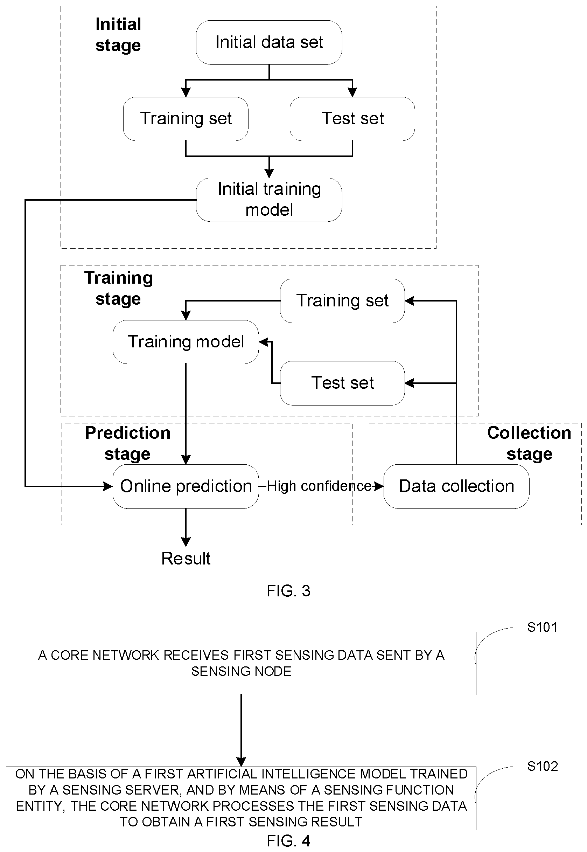

Referring to FIG. 3, FIG. 3 is a flow schematic diagram of a model training method provided by the embodiments of the present disclosure. As shown in FIG. 3, taking an example in which the artificial intelligence model adopts the manner of offline training and online prediction, the training of the artificial intelligence model includes four stages: an initial stage, a training stage, a prediction stage, and a collection stage.

In the initial stage of the artificial intelligence model training, an initial data set using simulation data or according to scenario actual measurement data may be stored in the sensing server, and initial training is performed by using the initial data set, to obtain an initial training model. In the training stage of the artificial intelligence model training, when the training data accumulates to a certain amount, periodic artificial intelligence model training is performed. In the prediction stage of the artificial intelligence model training, the sensing function entity performs online prediction in real time, and transfers preprocessed data with high confidence and corresponding sensing results to the sensing server for training sample collection. In the collection stage of the artificial intelligence model training, the sensing server continuously collects data for periodically training the artificial intelligence model.

In some embodiments, the manner of online training and online prediction of the artificial intelligence model may refer to the artificial intelligence function in the sensing function entity, which may perform some lightweight online training and online prediction, and transfer preprocessed data with high confidence and corresponding sensing results to the sensing server for training sample collection.

In some embodiments, the sensing server is further configured to send the trained artificial intelligence model to the sensing function entity.

In some embodiments, the sensing server is further configured with at least one of the following functions: a service control function, a data preprocessing function, a data storage function, or a data exposure function.

The service control function includes at least one of: management of an artificial intelligence application, management of model training time, management of the data exposure function, management of information transmission; the data preprocessing function is used for extracting feature data or performing normalization processing on the sensing data; the data storage function is used for storing sensing data with relatively high confidence as a data set for subsequent periodic training of the artificial intelligence model; the data exposure function is used for providing at least one of sensing data, sensing results, or the artificial intelligence model externally.

In some embodiments, the management of artificial intelligence applications is used to determine whether the sensing server performs training of the artificial intelligence model; the management of model training time is used to determine a training period of the artificial intelligence model; the management of the data exposure function is used to determine whether to expose and share the sensing data and the sensing results; and the management of information transmission is used to determine whether to transmit the exposed and shared sensing data and sensing results.

In some embodiments, the sensing server is further configured to send at least one of the following contents to the core network: sensing data, or the artificial intelligence model.

In some embodiments, the sensing node is further configured to receive a first sensing control instruction sent from the sensing function entity in the core network.

The first sensing control instruction is used to instruct the sensing node to perform sensing detection.

In some embodiments, the sensing node is further configured to send, in response to the first sensing control instruction, a first sensing signal, and acquire first sensing data.

For example, after the sensing node receives the first sensing control instruction sent from the sensing function entity, the sensing node sends a first sensing signal according to the sensing manner indicated by the first sensing control instruction, executes a first sensing task, and obtains first sensing data.

It should be noted that, the first sensing data may be measurement data of a physical layer, or may be sensing result data.

In some embodiments, the sensing node is further configured to send the first sensing data to the sensing function entity in the core network.

For example, the sensing node, after acquiring the sensing data, sends the sensing data to the sensing function entity.

In some embodiments, the sensing node is further configured to receive a second sensing control instruction sent from an intelligent agent located in an edge network.

The second sensing control instruction is used to instruct the sensing node to perform sensing detection.

In some embodiments, the sensing node is further configured to send, in response to the second sensing control instruction, a second sensing signal, and acquire second sensing data.

For example, after the sensing node receives the second sensing control instruction sent from the intelligent agent located in the edge network, the sensing node sends a second sensing signal according to the sensing manner indicated by the second sensing control instruction, executes a second sensing task, and obtains second sensing data.

In some embodiments, the sensing node is further configured to send the second sensing data to the intelligent agent.

In some embodiments, referring to FIG. 2, there may be a plurality of sensing nodes, and respective sensing nodes communicate with each other through a Uu interface (U is user to network interface, u is Universal), and each sensing node may be a generation node B (gNB) base station or a UE.

In some embodiments, sensing data or a sensing result processed by the UE is transferred to the sensing function entity or the intelligent agent through the Uu interface and the gNB base station.

In some embodiments, the sensing node is further configured for sensing signal processing, communication signal processing, and manual training and prediction of an artificial intelligence model.

It should be noted that, the system architecture and application scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the system architecture and the emergence of new traffic scenarios, the technical solutions provided in the embodiments of the present disclosure are also applicable to similar technical problems.

The sensing and communication method provided by the embodiments of the present disclosure is explained below in conjunction with the drawings of the specification.

Referring to FIG. 4, FIG. 4 is a flow schematic diagram of a sensing and communication method provided by the embodiments of the present disclosure, applied to a core network, where the core network includes a sensing function entity and a sensing server. As shown in FIG. 4, the method includes: S101 to S102 as follows.

In S101, a core network receives first sensing data sent from a sensing node.

In some embodiments, after the core network receives a sensing service request message generated by an application function network element in the core network, in response to the sensing service request message, the sensing function entity in the core network sends a first sensing control instruction to the sensing node.

The first sensing control instruction is used to instruct the sensing node to perform sensing detection.

Further, the sensing node, after receiving the first sensing control instruction sent from the sensing function entity in the core network, in response to the first sensing control instruction, sends a first sensing signal and acquires first sensing data.

In some embodiments, the sensing node, after acquiring the first sensing data, sends the first sensing data to the core network, and the core network receives the first sensing data sent from the sensing node.

In S102, the core network processes the first sensing data, by the sensing function entity, based on a first artificial intelligence model trained by the sensing server, to obtain a first sensing result.

In some embodiments, after the core network acquires the first sensing data sent from the sensing node, the sensing function entity in the core network may acquire the trained first artificial intelligence model from the sensing server, and process the first sensing data through the first artificial intelligence model, to obtain the first sensing result.

For example, after the core network sends the sensing service request message to the sensing function entity, the sensing function entity receives the sensing service request message sent from the core network and acquires a trained artificial intelligence model from the sensing server.

In some embodiments, the sensing service request message may carry a sensing service type, a sensing area, a sensing reporting content, and a sensing reporting type.

The sensing service type may be drone sensing, vehicle sensing, or sensing of other targets. The sensing area may be within a range of a radius of 1000 meters centered on the sensing node or other ranges. The sensing reporting content may include a position and speed of a target. The sensing reporting type may be sensing result reporting.

It should be noted that, the target may also be other people, vehicles, or other objects with movement trajectories or state changes, and the present disclosure does not limit the type of the target.

In some embodiments, the sensing function entity, in response to the sensing service request message, selects a sensing node to perform sensing detection, and acquires first sensing data obtained by the sensing node in the process of the sensing detection.

In some embodiments, the above sensing function entity, in response to the sensing service request message, selecting the sensing node to perform sensing detection, and acquiring the first sensing data obtained by the sensing node in the process of the sensing detection, may be implemented as steps as follows.

In A1, the sensing function entity determines a sensing task based on the sensing service request message.

For example, the sensing function entity, in response to the sensing service request message, authenticates the sensing service request message through the sensing management function in the sensing function entity, and after the sensing service request message passes the authentication, the sensing management function determines the sensing task based on the sensing service request message (such as sensing a drone in a sensing area, mainly sensing the position and speed of the drone).

In A2, the sensing function entity selects a sensing node that executes the sensing task, and sends a first sensing control instruction to the sensing node.

The first sensing control instruction is used to instruct the sensing node to execute the sensing task, and the first sensing control instruction includes sensing configuration information, where the sensing configuration information is used to configure at least one of a sensing resource, sensing time, or a sensing signal.

For example, after the sensing task is determined, the sensing management function in the sensing function entity sends the sensing service request message to the sensing control function, and the sensing control function in the sensing function entity selects, according to the sensing service request message, a sensing node and a sensing manner to execute the sensing task, and sends a first sensing control instruction to the sensing node.

In some embodiments, the sensing node may be a base station, and the sensing manner may be A sending and A receiving, or A sending and B receiving.

It should be noted that, A sending and A receiving refers to sending a sensing signal through a sensing node A (or a base station A) and receiving sensing data through the sensing node A (or the base station A), and A sending and B receiving refers to sending a sensing signal through a sensing node A (or a base station A) and receiving sensing data through a sensing node B (or a base station B).

Further, the sensing node starts to execute the sensing task, performs sensing detection on the sensing area, acquires first sensing data obtained in the process of the sensing detection, and sends the first sensing data to the core network.

In some embodiments, the sensing node receives, according to integrated sensing and communication sensing time-frequency resources indicated by the first sensing control function, a sensing signal reflected back by a target, performs baseband processing on the sensing signal, and obtains first sensing data of the target.

In some embodiments, the first sensing data may be range-Doppler (RD) map data of the target.

In A3, the core network receives the first sensing data sent from the sensing node.

In some embodiments, the sensing node, after acquiring the first sensing data obtained in the process of the sensing detection, sends the first sensing data (such as RD map data) to the core network, and the core network receives the first sensing data.

Further, after the core network receives the first sensing data sent from the sensing node, the sensing function entity in the core network processes the first sensing data based on the first artificial intelligence model, to obtain a first sensing result.

It may be understood that, based on the sensing and communication method provided by the embodiments of the present disclosure, by newly adding the sensing function entity and the sensing server in the existing core network architecture, the core network itself also has capabilities of model training and intelligent computing. Meanwhile, the sensing data is processed based on the first artificial intelligence model trained by the sensing server to obtain the first sensing result, so that the manner of acquiring the first sensing result is more accurate and less prone to errors.

In some embodiments, the first artificial intelligence model may be trained by the sensing server. After the sensing function entity acquires the first sensing data sent from the sensing node, the sensing processing function in the sensing function entity preprocesses the first sensing data and then sends the first sensing data to the sensing server, and the sensing server trains the first artificial intelligence model based on the preprocessed first sensing data.

In some embodiments, the sensing server, in response to first indication information sent from the sensing control function in the sensing function entity for indicating the sensing server to perform model training, trains the first artificial intelligence model.

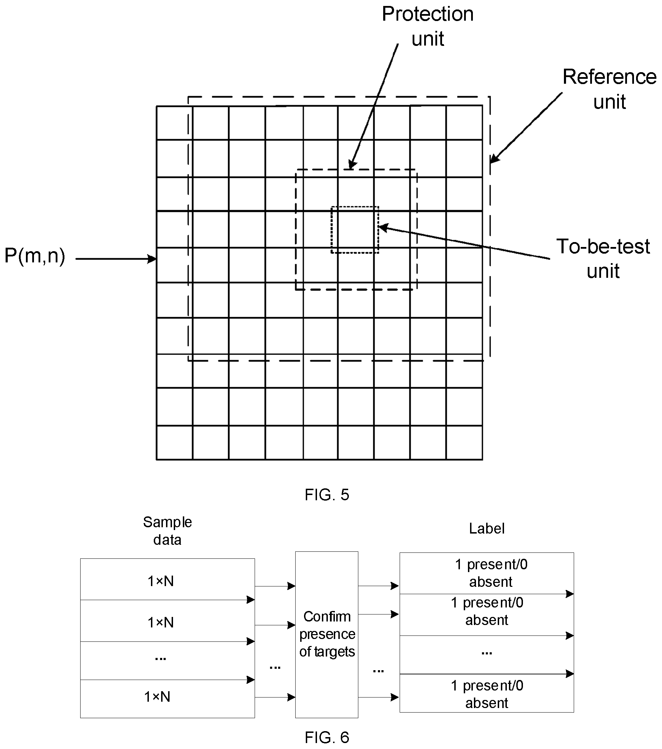

Referring to FIG. 5, FIG. 5 is a schematic diagram of a range-Doppler map provided by the embodiments of the present disclosure, as shown in FIG. 5, P_{(m, n)} represents power of a grid where an m-th row and an n-th column are located in the RD map.

In some embodiments, in the initial stage of training of the first artificial intelligence model, the sensing server uses initial test data to perform model training on the first artificial intelligence model. When the RD map of the sensing signal is determined, according to a reference unit in the RD map, a to-be-tested unit and a guard unit of the RD data are extracted from the RD map, which are shown as power data of nine grids, forming feature data of [ P₀, P₁, P₂, P₃, P₄, P₅, P₆, P₇, P₈], and this set of feature data is taken as a piece of sample data, and its corresponding label is 0 or 1, where 0 represents no target, and 1 represents target present, and the correspondence is as shown in FIG. 6. FIG. 6 is a schematic diagram of a correspondence of feature data provided by the embodiments of the present disclosure.

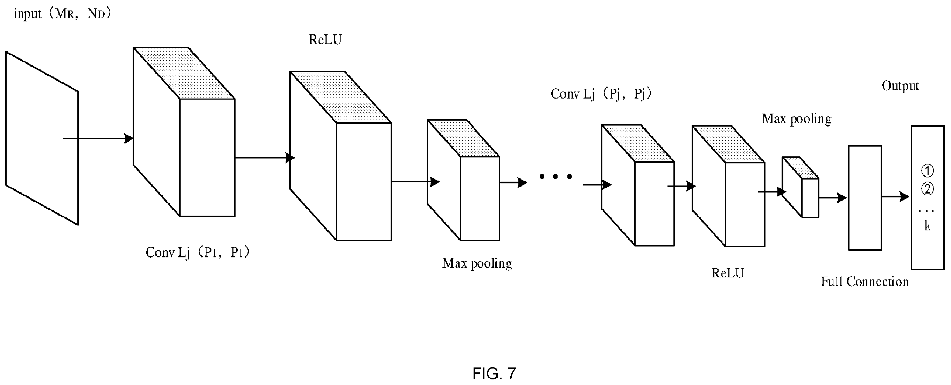

In some embodiments, the present disclosure adopts a convolutional neural network (CNN) network to train the model. FIG. 7 is a schematic diagram of an architecture of a convolutional neural network provided by the embodiments of the present disclosure. As shown in FIG. 7, Lⱼ in Conv P₁( P₁,Lⱼ) is a number of convolution kernels, and (P₁, P₁) represents a convolution kernel size.

It should be noted that, the network training is not limited to the CNN network, and other networks, such as a residual network (ResNet), etc., may also be used.

In some embodiments, other than an input layer and a fully connected layer, a structure of the CNN network may also have J layers of networks in the middle, and each layer of network includes convolution, activation, and pooling operations.

It should be noted that, a CNN network model is a type of feedforward neural network containing convolution computation and having a deep structure. The CNN network model has representation learning capability and is capable of performing shift-invariant classification on input information according to its hierarchical structure.

In some embodiments, the activation function of the CNN network adopts a linear rectification function (ReLU), as shown in Formula (1): ${f}_{x} = {max}_{\left(0, x\right)}$ Formula (1).

It should be noted that, the ReLU function, also referred to as a rectified linear unit, is a commonly used activation function in artificial neural networks, and usually referring to a nonlinear function represented by a ramp function and variants thereof.

In some embodiments, the activation function of the fully connected layer uses a Sigmoid function, as shown in Formula (2): ${S}_{x} = \frac{1}{1 + {e}^{- x}}$ Formula (2).

It should be noted that, the Sigmoid function is an S-shaped function commonly found in biology, also referred to as an S-shaped growth curve. In information science, due to its properties of being monotonically increasing and having a monotonically increasing inverse function, etc., the Sigmoid function is often used as an activation function of a neural network, mapping variables to between (0, 1).

In some embodiments, a loss function used by the fully connected layer is a cross-entropy function, as shown in Formula (3): $Loss = - \frac{1}{{O}_{s}} {\sum }_{i = 1}^{{O}_{s}} \left({y}_{i}log\hat{{y}_{i}}+\left(1-{y}_{i}\right) log \left(1-\hat{{y}_{i}}\right)\right)$ Formula (3).

Oₛ is an output size, yᵢ is a sample true value, and $\hat{{y}_{i}}$ is a predicted value output by the model.

It should be noted that, the cross-entropy function is mainly used to measure difference information between two probability distributions. The significance of cross entropy is the difficulty of text recognition by using this model, or, from the perspective of compression, how many bits on average each word needs to be encoded.

In some embodiments, the initial test data may be divided with 80% of the data as a training set and 20% of the data as a test set, the training set is used for training of the first artificial intelligence model, and the test set is used for testing of the first artificial intelligence model.

In some embodiments, the sensing server sends the trained first artificial intelligence model to the sensing function entity, and the sensing function entity processes the first sensing data based on the first artificial intelligence model, extracts data of the RD map, extracts feature data [P₀, P₁, P₂, P₃, P₄, P₅, P₆, P₇, P₈] as shown in FIG. 5 above, and takes such feature data as an input of the first artificial intelligence model, and online predicting output is no target (0) or target present (1).

In some embodiments, for feature data with a target present, other sensing detection is performed on the target, such as direction of arrival (DOA) estimation, locking signal-to-noise ratio (SNR) estimation, speed estimation, power calculation, etc.

It should be noted that, the DOA estimation is a positioning technology that acquires distance information and orientation information of a target by processing a received echo signal. The SNR refers to a ratio of intensity of a received useful signal to intensity of a received interference signal (noise and interference).

Further, according to the first sensing data of the above sensing detection, target detection, trajectory tracking, trajectory correction, target association, and target recognition are performed on the target.

It should be noted that, if a plurality of sensing nodes perform sensing, data fusion among the plurality of sensing nodes is performed, to obtain a more complete and more accurate first sensing result of target detection, trajectory tracking, trajectory correction, target association, and target recognition.

In some embodiments, the first sensing result fusion among the plurality of sensing nodes may use manners such as merging, selecting the optimal, etc., or may also be performed with the help of videos.

In some embodiments, the sensing function entity transfers first sensing results with relatively high confidence and corresponding labels to the sensing server for data collection, and the sensing server performs periodic model training on the first artificial intelligence model according to the second indication information sent from the sensing control function.

In some embodiments, the sensing server sends at least one of the first sensing data, the first sensing result, or the first artificial intelligence model to the core network.

In some embodiments, the sensing processing function in the sensing function entity sends a sensing service response message to the sensing management function, and the sensing management function sends the sensing service response message to the core network, and reports the first sensing result according to the sensing service request message.

In some embodiments, the sensing function entity performs target detection, trajectory tracking, trajectory correction, target association, and target recognition according to information such as DOA estimation, SNR estimation, speed estimation, power calculation, etc., reported by the sensing node, to obtain a movement trajectory of the target.

In some embodiments, because in wireless communication, especially in high-frequency band wireless communication, radio signals are easily blocked, and signal dead zones occur, thereby resulting in the lack of a trajectory of a target. At this time, prediction of the missing part of the trajectory may be performed according to known historical trajectory information of the target.

In some embodiments, in the initial stage of training of the first artificial intelligence model, the sensing server uses initial test data to perform model training on the first artificial intelligence model, where the initial test data may also be actual test trajectory data of the target.

Exemplarily, a trajectory point sequence of the target may be represented as [(Lo₁, La₁, H₁, V₁), (Lo₂, La₂, H₂, V₂), ..., (Loₙ, Laₙ, Hₙ, Vₙ)].

Loₜ represents a longitude of a trajectory point of a sensed target at a t-th moment, Laₜ represents a latitude of the trajectory point of the sensed target at the t-th moment, Hₜ represents a height of the trajectory point of the sensed target at the t-th moment, Vₜ represents a speed of the sensed target at the trajectory point (Loₜ, Laₜ, Hₜ, ) at the t-th moment, where t = 1, 2, ..., n.

In some embodiments, after the actual test trajectory data of the target is acquired, data preprocessing needs to be performed on the actual test trajectory data, and normalization processing is performed on the actual test trajectory data between a minimum value and a maximum value within a certain range, so as to implement standardization of training data.

In some embodiments, trajectory data of adjacent moments in the trajectory point sequence are differentiated, that is, xₜ=Loₜ₊₁-Loₜ, yₜ=Laₜ₊₁-Laₜ, zₜ=Hₜ₊₁-Hₜ, vₜ=Vₜ₊₁-Vₜ.

Further, (n-1) trajectory sequences are obtained, which are [(x₁, y₁, z₁, v₁), (x₂, y₂, z₂, v₂), ..., (xₙ₋₁, yₙ₋₁, zₙ₋₁, vₙ₋₁)].

In some embodiments, the sklearn tool in a machine learning library is used to normalize the differential trajectory sequence data by using the MinMaxScaler() function, scaled to within a range of [-1, 1], and an output parameter scaler of the function is saved, and a supervised sequence is constructed for the normalized data. Table 1 is a schematic diagram of a construction method of a supervised sequence provided by some embodiments of the present disclosure. Taking as an example of n = 13, as shown in Table 1.

**Table 1**

| Sequence | Label |
|---|---|
| (x₁, y₁, z₁, v₁), (x₂, y₂, z₂, v₂), ..., (x₁₂, y₁₂, z₁₂, v₁₂) | (x₁₃, y₁₃, z₁₃, v₁₃) |
| (x₂, y₂, z₂, v₂), (x₃, y₃, z₃, v₃), ..., (x₁₃, y₁₃, z₁₃, v₁₃) | (x₁₄, y₁₄, z₁₄, v₁₄) |
| (x₃, y₃, z₃, v₃), (x₄, y₄, z₄, v₄), ..., (x₁₄, y₁₄, z₁₄, v₁₄) | (x₁₅, y₁₅, z₁₅, v₁₅) |
| (x₄, y₄, z₄, v₄), (x₅, y₅, z₅, v₅), ..., (x₁₅, y₁₅, z₁₅, v₁₅) | (x₁₆, y₁₆, z₁₆, v₁₆) |
| ... | ... |
| (xₜ₋₁₂, yₜ₋₁₂, zₜ₋₁₂, vₜ₋₁₂), (xₜ₋₁₁, yₜ₋₁₁, zₜ₋₁₁, vₜ₋₁₁), ..., (xₜ₋₁, yₜ₋₁, zₜ₋₁, vₜ₋₁) | (xₜ,yₜ,zₜ,vₜ) |

Exemplarily, if the constructed supervised sequence is [(x₁, y₁, z₁, v₁), (x₂, y₂, z₂, v₂), ..., (x₁₂, y₁₂, z₁₂, v₁₂)], the label of the supervised sequence is (x₁₃, y₁₃, z₁₃, v₁₃); if the constructed supervised sequence is [(x₂, y₂, z₂, v₂), (x₃, y₃, z₃, v₃), ..., (x₁₃, y₁₃, z₁₃, v₁₃)], the label of the supervised sequence is (x₁₄, y₁₄, z₁₄, v₁₄); if the constructed supervised sequence is [(x₃, y₃, z₃, v₃), (x₄, y₄, z₄, v₄), ..., (x₁₄, y₁₄, z₁₄, v₁₄)], the label of the supervised sequence is (x₁₅, y₁₅, z₁₅, v₁₅); if the constructed supervised sequence is [(x₄, y₄, z₄, v₄), (x₅, y₅, z₅, v₅), ..., (x₁₅, y₁₅, z₁₅, v₁₅)], the label of the supervised sequence is (x₁₆, y₁₆, z₁₆, v₁₆); if the constructed supervised sequence is [(xₜ₋₁₂, yₜ₋₁₂, zₜ₋₁₂, vₜ₋₁₂), (xₜ₋₁₁, yₜ₋₁₁, zₜ₋₁₁, vₜ₋₁₁), ..., (xₜ₋₁, yₜ₋₁, zₜ₋₁, vₜ₋₁)], the label of the supervised sequence is (xₜ, yₜ, zₜ, vₜ).

In some embodiments, the processed data set is divided into a training data set and a test data set at a ratio of 80% and 20%, the training data set is used for training the first artificial intelligence model, and the test data set is used for evaluating the first artificial intelligence model.

In some embodiments, a long short term memory (LSTM) neural network model may be constructed, and network model parameters are configured to train the first artificial intelligence model.

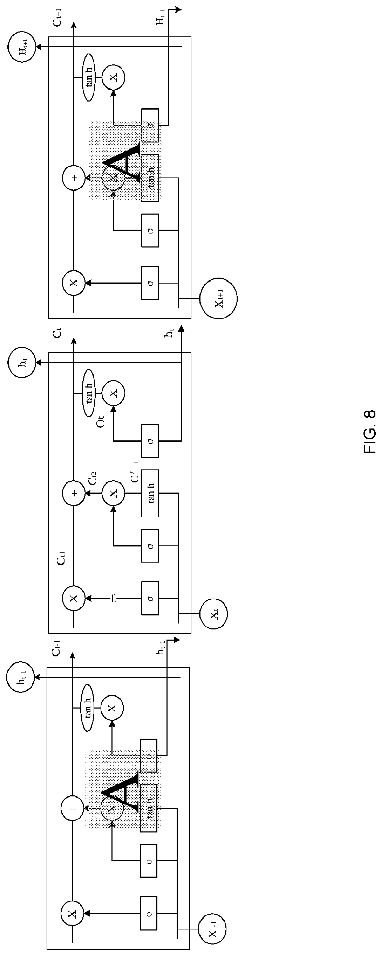

In some embodiments, the LSTM network model includes information of three gates, i.e., a forget gate, an input gate, and an output gate. FIG. 8 is a structural schematic diagram of a long short term memory neural network model provided by the embodiments of the present disclosure. As shown in FIG. 8, the forget gate mainly controls a proportion of data features to be forgotten from the previous layer of the network, that is, the input data features are weighted and summed with the previous sequence state, and input to the forget gate to obtain a data feature output of the forget gate, where a calculation manner thereof is as shown in Formula (4). ${f}_{t} = σ \left({W}_{xf}⋅{x}_{t}+{W}_{hf}⋅{h}_{t - 1}+{b}_{f}\right)$ Formula (4).
ft is the data feature output of the forget gate, W_{xf} is a weighting coefficient of the forget gate for data at a current moment, xₜ is the input data feature, W_{hf} represents a weighting coefficient of the forget gate for a state at a previous moment, hₜ₋₁ is the previous sequence state, b_{f} is a data bias constant of the forget gate, and σ(x) represents a sigmoid activation function.

Further, main memory data at the current moment is obtained in combination with memory system data at the previous moment, where a calculation manner is as shown in Formula (5). ${c}_{t 1} = {c}_{t - 1} ⊙ {f}_{t}$ Formula (5).
cₜ₁ is the main memory data at the current moment, and cₜ₋₁ is the memory system data at the previous moment.

In some embodiments, the input gate mainly screens effective features of current input data, and compensates and updates the control data feature of the forget gate in combination with the current data. A data feature extraction manner of the input gate is as shown in Formula (6). ${i}_{t} = σ \left({W}_{xi}⋅{x}_{t}+{W}_{hi}⋅{h}_{t - 1}+{b}_{i}\right)$ Formula (6).
iₜ is the data feature output of the input gate, Wₓᵢ is a weighting coefficient of the input gate for data at the current moment, Wₕᵢ is a weighting coefficient of the input gate for a state at the previous moment, and bᵢ is a data bias constant of the input gate.

Further, the input data feature will compensate the memory data feature to a certain extent, and the feature parameters of the input gate need to be screened. A calculation manner of a screening control coefficient is as shown in Formula (7). ${c}_{t}^{′} = tan h \left({W}_{xc}⋅{x}_{t}+{W}_{hc}⋅{h}_{t - 1}+{b}_{c}\right)$ Formula (7). ${c}_{t}^{′}$ is a feature screening control coefficient of the input gate, W_{xc} is an input data screening control weight coefficient at the current moment, W_{hc} is a data state input screening weight coefficient at the previous moment, b_{c} is a screening control data bias constant, and tan h(x) is an activation function.

Further, the input gate data is screening-controlled, to obtain memory system data at a next moment, and a calculation manner is as shown in Formula (8). ${c}_{t 2} = {c}_{t}^{′} ⊙ {i}_{t}$ Formula (8).
cₜ₂ is the memory system data at the next moment.

In some embodiments, an output value of a memory parameter at the current moment may be determined according to the main memory data at the current moment and the memory system data at the next moment, where a calculation manner is as shown in Formula (9). ${c}_{t} = {c}_{t 1} + {c}_{t 2}$ Formula (9).
cₜ is the output value of the memory parameter at the current moment.

In some embodiments, the output gate mainly learns the model and predicts the training set according to the forgotten data feature and the current data feature. The training method thereof is as shown in Formula (10). ${h}_{t} = σ \left({W}_{xo}⋅{x}_{t}+{W}_{ho}⋅{h}_{t - 1}+{b}_{o}⊙tan h \left({c}_{t}\right)\right)$ Formula (10).
hₜ is output data of the output gate, Wₓₒ is a data weight coefficient at the current moment in the output gate, Wₕₒ is a state data weight coefficient at the previous moment in the output gate, and bₒ is a data bias constant in the output gate.

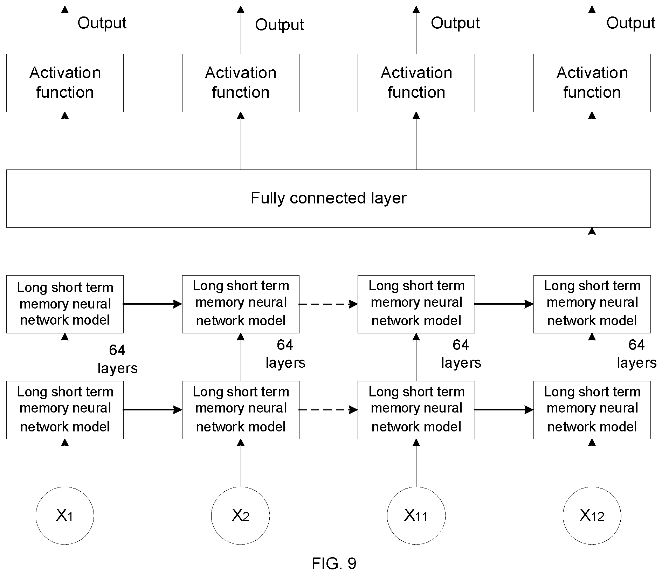

In some embodiments, the present disclosure may adopt an architecture of two layers of LSTM plus a fully-connected layer. FIG. 9 is a schematic diagram of an architecture of a long short term memory neural network model provided by the embodiments of the present disclosure. Table 2 shows a parameter configuration manner of the architecture of two layers of LSTM plus the fully-connected layer, as shown in Table 2.

**Table 2**

| Parameter item | Parameter value |
|---|---|
| Number of LSTM layers | 2 |
| Number of hidden layers | 64 |
| Activation function | ReLU |
| Loss function | MSE |

Exemplarily, in conjunction with FIG. 9 and Table 2, the number of hidden layers of the LSTM may be 64, the activation function may be ReLU, and the loss function may be a mean square error function (MSE).

In some embodiments, after the first artificial intelligence model is trained, the sensing server sends the trained first artificial intelligence model to the core network.

In some embodiments, after the sensing function entity receives the trained first artificial intelligence model, the sensing function entity preprocesses the actual test trajectory data (the preprocessing method is consistent with the preprocessing method during model training), inputs the preprocessed data set into the first artificial intelligence model, to obtain predicted values (xₜ, yₜ, zₜ, vₜ), performs inverse normalization according to the scaler saved during data preprocessing, and then adds (Loₙ, Laₙ, Hₙ, Vₙ), to obtain final predicted values (Loₙ₊₁, Laₙ₊₁, Hₙ₊₁, Vₙ₊₁).

In some embodiments, the sensing function entity transfers the actual test trajectory data with relatively high confidence and corresponding labels to the sensing server for data collection.

In some embodiments, the sensing function entity transfers sensing results with relatively high confidence and corresponding labels to the sensing server for data collection, and the sensing server performs periodic model training on the first artificial intelligence model according to the second indication information sent from the sensing control function for indicating the training period.

In some embodiments, the sensing processing function in the sensing function entity sends response information of the sensing service request message to the sensing management function, and the sensing management function sends the response information of the sensing service request message to the core network, and reports a sensing result according to the sensing service request message, thereby displaying a complete running trajectory of the target.

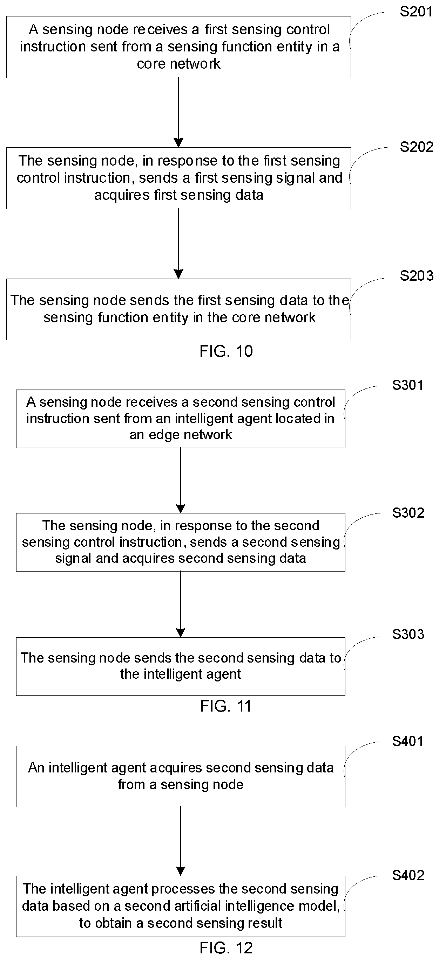

Referring to FIG. 10, FIG. 10 is a flow schematic diagram of another sensing and communication method provided by the embodiments of the present disclosure, applied to a sensing node. As shown in FIG. 10, the method includes: S201 to S203 as follows.

In S201, a sensing node receives a first sensing control instruction sent from a sensing function entity in a core network.

In some embodiments, after the core network receives a sensing service request message sent from an intelligent agent located in an edge network or a sensing service request message generated by an application function network element in the core network, in response to the sensing service request message, the sensing function entity in the core network sends a first sensing control instruction to the sensing node.

The first sensing control instruction is used to instruct the sensing node to perform sensing detection.

In S202, the sensing node, in response to the first sensing control instruction, sends a first sensing signal and acquires first sensing data.

In some embodiments, the sensing node, after receiving the first sensing control instruction sent from the sensing function entity in the core network, in response to the first sensing control instruction, sends a first sensing signal and acquires first sensing data.

In S203, the sensing node sends the first sensing data to the sensing function entity in the core network.

In some embodiments, the sensing node, after acquiring the first sensing data, sends the first sensing data to the sensing function entity in the core network.

Referring to FIG. 11, FIG. 11 is a flow schematic diagram of yet another sensing and communication method provided by the embodiments of the present disclosure, applied to a sensing node. As shown in FIG. 11, the method includes: S301 to S303 as follows.

In S301, a sensing node receives a second sensing control instruction sent from an intelligent agent located in an edge network.

The second sensing control instruction is used to instruct the sensing node to perform sensing detection.

In some embodiments, after the core network receives the sensing service request message sent from the intelligent agent located in the edge network, in response to the sensing service request message, the core network sends a second sensing control instruction to the intelligent agent.

In S302, the sensing node, in response to the second sensing control instruction, sends a second sensing signal and acquires second sensing data.

In some embodiments, the sensing node, after receiving the second sensing control instruction from the core network, in response to the second sensing control instruction, sends the second sensing signal and acquires the second sensing data.

In S303, the sensing node sends the second sensing data to the intelligent agent.

In some embodiments, the sensing node, after acquiring the second sensing data, sends the second sensing data to the intelligent agent located in the edge network.

It should be noted that, based on the sensing and communication method provided by the embodiments of the present disclosure, through communication interaction between the sensing node and the intelligent agent, the intelligent agent acquires the second sensing data from the sensing node. Meanwhile, the second sensing data is processed based on the second artificial intelligence model trained by the sensing server in the intelligent agent, so that the processing manner of the sensing data is diversified, the accuracy of the sensing results is improved, and the credibility of the second sensing result is higher.

Referring to FIG. 12, FIG. 12 is a flow schematic diagram of yet another sensing and communication method provided by the embodiments of the present disclosure, applied to an intelligent agent in an edge network. As shown in FIG. 12, the method includes: S401 to S402.

In S401, an intelligent agent acquires second sensing data from a sensing node.

In some embodiments, when the intelligent agent needs to acquire the second sensing data, the intelligent agent sends a second sensing control instruction to the sensing node.

The second sensing control instruction is used to instruct the sensing node to perform sensing detection.

In some embodiments, the sensing node, after receiving the second sensing control instruction sent from the intelligent agent, in response to the second sensing control instruction, sends a second sensing signal, acquires second sensing data, and sends the second sensing data to the intelligent agent, and the intelligent agent receives the second sensing data.

In S402, the intelligent agent processes the second sensing data based on a second artificial intelligence model, to obtain a second sensing result.

In some embodiments, after the intelligent agent receives the second sensing data sent from the sensing node, the intelligent agent may process the second sensing data based on the second artificial intelligence model trained by the sensing server in the intelligent agent, to obtain the second sensing result.

It should be noted that, for the training manner of the second artificial intelligence model is consistent with the training manner of the first artificial intelligence model in the step S102 above, which will not be repeated herein.

In some embodiments, the intelligent agent may also send at least one of the following contents to the core network: the sensing service response message, the second sensing data, the second sensing result, or the second artificial intelligence model.

In some embodiments, the intelligent agent may also receive at least one of the following contents sent from the core network: the sensing service request message, the first sensing data, the first sensing result, or the first artificial intelligence model.

The first sensing result is obtained by processing the first sensing data based on the first artificial intelligence model.

It should be noted that, based on the sensing and communication method provided by the embodiments of the present disclosure, through communication interaction between the sensing node and the intelligent agent, the intelligent agent acquires the second sensing data from the sensing node. Meanwhile, the second sensing data is processed based on the second artificial intelligence model trained by the sensing server in the intelligent agent, so that the processing manner of the sensing data is diversified, the accuracy of the sensing results is improved, and the credibility of the second sensing result is higher.

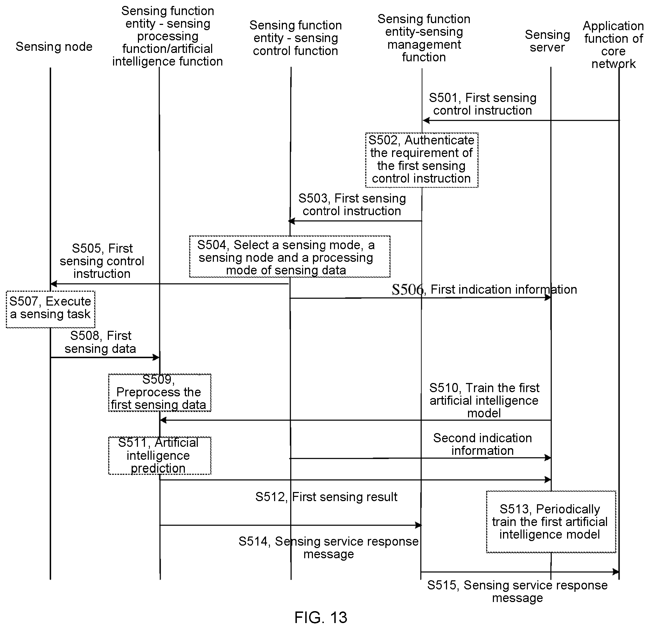

In some embodiments, the above steps S101 to S102 may also be implemented through the flow shown in FIG. 13. Referring to FIG. 13, FIG. 13 is a flow schematic diagram of yet another sensing and communication method provided by the embodiments of the present disclosure. As shown in FIG. 13, taking an example in which a drone is the target, the method includes: S501 to S515 as follows.

In S501, a core network sends a first sensing control instruction of a drone to a sensing management function in a sensing function entity.

The first sensing control instruction is used to indicate a sensing service requirement, and the first sensing control instruction may carry a sensing service type, a sensing area, sensing reporting content, and a sensing reporting type.

The sensing service type is drone sensing. The sensing area may be within a range of a radius of 1000 meters centered on the sensing node or other ranges. The sensing reporting content may include the position and speed of the drone. The sensing reporting type may be sensing result reporting.

In S502, the sensing management function, after acquiring the first sensing control instruction, authenticates the first sensing control instruction.

In S503, the sensing management function sends the first sensing control instruction that passes the authentication to a sensing control function in the sensing function entity.

In S504, the sensing control function, after acquiring the first sensing control instruction, selects a sensing manner, a sensing node, and a processing manner of sensing data for the drone according to the first sensing control instruction.

In S505, the sensing control function sends the first sensing control instruction to the sensing node.

The first sensing control instruction is used to instruct the sensing node to execute a sensing task, and the sensing control instruction includes sensing configuration information, where the sensing configuration information is used to configure at least one of a sensing resource, sensing time, or a sensing signal.

In S506, the sensing control function sends first indication information for performing model training to a sensing server.

In S507, the sensing node, after receiving the first sensing control instruction, according to the first sensing control instruction, sends a first sensing signal for the drone, executes a first sensing task, and acquires first sensing data of the drone.

In S508, the sensing node sends the first sensing data of the drone to a sensing processing function of the sensing function entity.

In S509, the sensing processing function performs sensing data preprocessing on the first sensing data.

The sensing data preprocessing includes extracting feature data or performing normalization processing on the first sensing data.

In S510, the sensing server, after receiving the first indication information for performing model training sent from the sensing control function, trains the first artificial intelligence model, and sends the trained first artificial intelligence model to the sensing processing function.

It should be noted that, for the training of the first artificial intelligence model, reference may be made to the step S102 above, which will not be repeated herein.

In S511, the sensing processing function performs artificial intelligence prediction on the first artificial intelligence model, to obtain a predicted first sensing result.

In S512, the sensing processing function sends the first sensing result to the sensing server for storage.

In S513, the sensing server performs periodic training on the first artificial intelligence model based on the second indication information sent from the sensing control function for indicating a training period and the sensing result.

In S514, the sensing processing function in the sensing function entity, after acquiring the first sensing result, sends a sensing service response message to the sensing management function.

In S515, the sensing management function sends the sensing service response message to the core network, and the core network acquires the first sensing result of the drone.

The first sensing result may include the position and speed of the drone, which displays a complete movement trajectory of the drone.

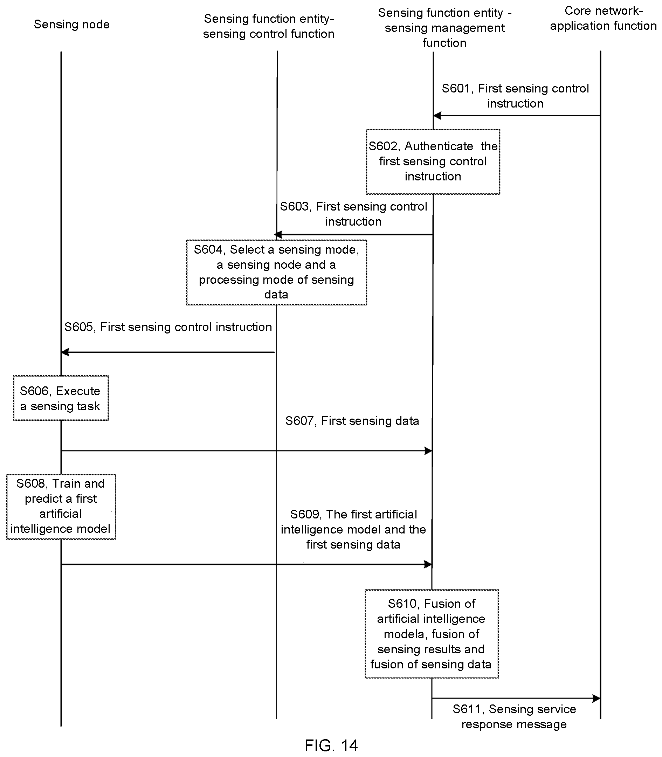

In some embodiments, the above steps S201 to S202 may also be implemented through the flow shown in FIG. 14. Referring to FIG. 14, FIG. 14 is a flow schematic diagram of yet another sensing and communication method provided by the embodiments of the present disclosure. As shown in FIG. 14, taking an example in which a drone is the target, the method includes: S601 to S611.

In S601, an application function of a core network sends a first sensing control instruction of the drone to a sensing management function in a sensing function entity.

The first sensing control instruction is used to indicate a sensing service requirement, and the first sensing control instruction may carry a sensing service type, a sensing area, a sensing reporting content, and a sensing reporting type.

The sensing service type is drone sensing. The sensing area may be within a range of a radius of 1000 meters centered on the sensing node or other ranges. The sensing reporting content may include the position and speed of the drone. The sensing reporting type may be sensing result reporting.

In S602, the sensing management function, after receiving the first sensing control instruction, authenticates the first sensing control instruction.

In S603, the sensing management function sends the first sensing control instruction that passes the authentication to a sensing control function in the sensing function entity.

In S604, the sensing control function selects a sensing manner, a sensing node, and a processing manner of sensing data according to the first sensing control instruction.

In S605, the sensing control function sends the first sensing control instruction to the sensing node.

In S606, the sensing node executes a sensing task according to the first sensing control instruction.

For example, the sensing node, after receiving the first sensing control instruction, according to the first sensing control instruction, sends a first sensing signal for the drone, executes a first sensing task, and acquires first sensing data of the drone.

In S607, the sensing node sends the first sensing data to the sensing management function.

In S608, the sensing node trains and predicts the first artificial intelligence model based on the first sensing data, to obtain a first sensing result.

In S609: the sensing node sends the first artificial intelligence model and the first sensing result to the sensing management function.

In S610, the sensing management function performs fusion of artificial intelligence models, fusion of sensing results, and fusion of sensing data.

In S611, the sensing management function sends a sensing service response message to the application function of the core network.

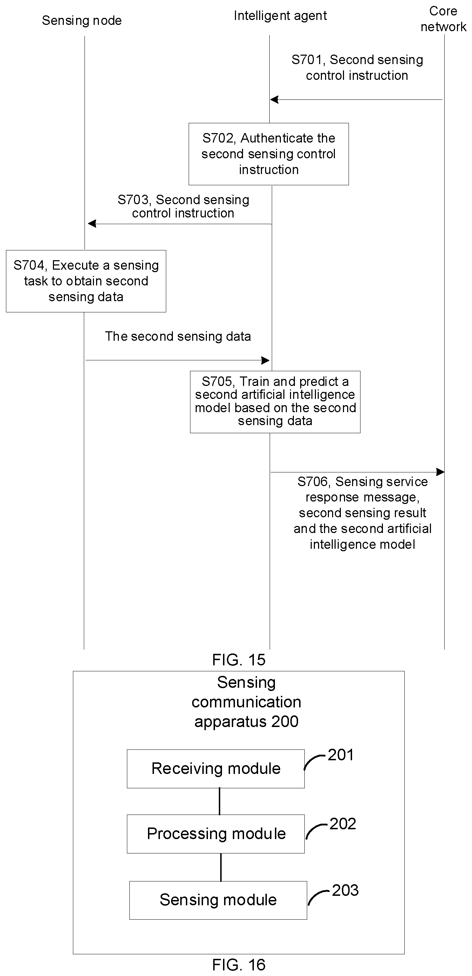

In some embodiments, the above steps S301 to S302 and steps S401 to S402 may also be implemented through the flow shown in FIG. 15. Referring to FIG. 15, FIG. 15 is a flow schematic diagram of yet another sensing and communication method provided by the embodiments of the present disclosure. As shown in FIG. 15, taking an example in which a drone is the target, the method includes: S701 to S706.

In S701, the application function of the core network sends a second sensing control instruction to the intelligent agent.

The second sensing control instruction is used to indicate a sensing service requirement, and the second sensing control instruction may carry a sensing service type, a sensing area, a sensing reporting content, and a sensing reporting type.

The sensing service type is drone sensing. The sensing area may be within a range of a radius of 1000 meters centered on the sensing node or other ranges. The sensing reporting content may include the position and speed of the drone. The sensing reporting type may be sensing result reporting.

In S702, the intelligent agent receives the second sensing control instruction, and authenticates the second sensing control instruction.

For example, the sensing function entity in the intelligent agent authenticates the second sensing control instruction.

In S703, the intelligent agent sends the second sensing control instruction that passes the authentication to the sensing node.

In S704, the sensing node executes a sensing task according to the second sensing control instruction, obtains second sensing data, and sends the second sensing data to the intelligent agent.

For example, the sensing node, after receiving the second sensing control instruction, according to the second sensing control instruction, sends a second sensing signal for the drone, executes a second sensing task, and acquires second sensing data of the drone.

In S705, the intelligent agent trains and predicts the second artificial intelligence model based on the second sensing data.

For example, the intelligent agent trains the second artificial intelligence model through the sensing server in the intelligent agent, and predicts the trained second artificial intelligence model through the sensing function entity in the intelligent agent, to obtain a second sensing result.

In S706, the intelligent agent sends a sensing service response message, the second sensing result, and the second artificial intelligence model to the core network.

In some embodiments, after the core network receives the second sensing result and the second artificial intelligence model, the sensing management function in the core network performs fusion of artificial intelligence models, fusion of sensing results, and fusion of sensing data.

The above introduces the solutions of the embodiments of the present disclosure mainly from the perspective of the method. It can be understood that, in order to implement the above functions, a sensing and communication apparatus contains at least one of corresponding hardware structures or software modules for performing the respective functions. Those skilled in the art should easily realize that, in conjunction with the exemplary units and algorithm steps described in the embodiments disclosed herein, the embodiments of the present disclosure can be implemented in the form of hardware or a combination of hardware and computer software. Whether a certain function is performed by hardware or by computer software driving hardware, depends on a specific application and a design constraint condition of the technical solution. Professional technicians may use different methods to implement the described functions for each specific application, but such implementation should not be considered beyond the scope of the embodiments of the present disclosure.

It can be understood that, in order to implement the above functions, the sensing and communication apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but such implementation should not be considered beyond the scope of the present disclosure.

In the embodiments of the present disclosure, the sensing and communication apparatus may be divided into functional modules according to the above-mentioned method embodiments, and for example, each functional module may be divided corresponding to each function, or two or more functions may also be integrated into one functional module. The above integrated module may be implemented in the form of hardware or may also be implemented in the form of software. It should be noted that, the division of the modules in the embodiments of the present disclosure is schematic, which is only a logical functional division, and there may be other divisions in actual implementations. The example in which each functional module is divided corresponding to each function, is taken for explanation below.

FIG. 16 is a structural schematic diagram of a sensing and communication apparatus provided by the embodiments of the present disclosure. The sensing and communication apparatus is applied to a core network and may perform the sensing and communication method provided in the above method embodiments. As shown in FIG. 16, the sensing and communication apparatus 200 includes: a receiving module 201, a processing module 202, and a sending module 203.

In some embodiments, the receiving module 201, is configured to receive first sensing data sent from a sensing node.

In some embodiments, the processing module 202, is configured to process, by a sensing function entity, the first sensing data based on a first artificial intelligence model trained by a sensing server, to obtain a first sensing result.

In some embodiments, the sending module 203, is configured to send, in response to a sensing service request message, a first sensing control instruction to the sensing node, where the first sensing control instruction is used to instruct the sensing node to perform sensing detection.

In some embodiments, the sensing service request message is sent from an intelligent agent located in an edge network to the core network; or the sensing service request message is generated by an application function network element in the core network.

In some embodiments, the sending module 203, is further configured to send at least one of following contents to the intelligent agent located in the edge network: a sensing service request message, a sensing service response message, the first sensing data, the first sensing result, or the first artificial intelligence model.

In some embodiments, the receiving module 201, is further configured to receive at least one of following contents sent from the intelligent agent located in the edge network: a sensing service request message, a sensing service response message, second sensing data, a second sensing result, or a second artificial intelligence model.

In some embodiments, the second sensing result is obtained by processing the second sensing data, by the intelligent agent, based on the second artificial intelligence model.

In some embodiments, the sensing server is configured with at least one of following functions: a service control function, a data preprocessing function, a data storage function, or a data exposure function.

In some embodiments, the service control function includes at least one of: management of an artificial intelligence application, management of model training time, management of the data exposure function, or management of information transmission.

In some embodiments, the data exposure function is used for providing at least one of sensing data, a sensing result, or an artificial intelligence model externally.

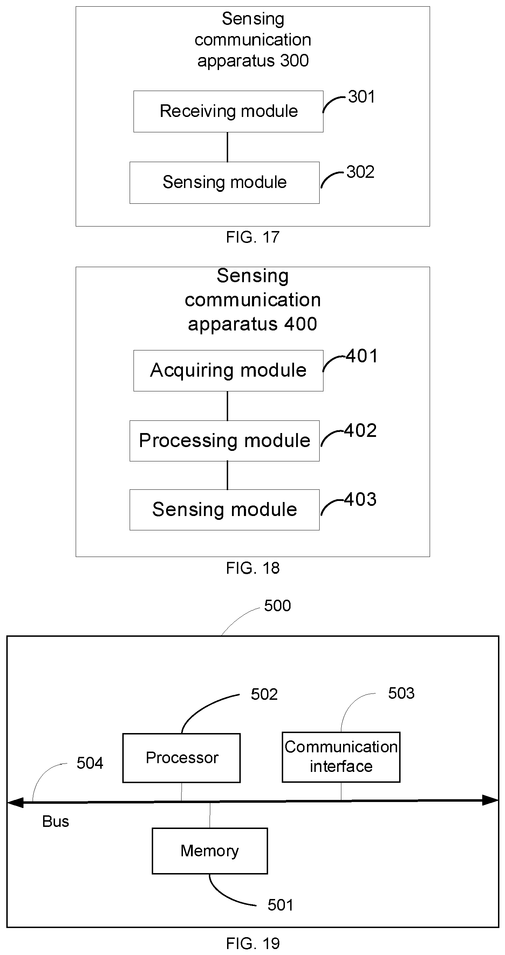

FIG. 17 is a structural schematic diagram of a sensing and communication apparatus provided by the embodiments of the present disclosure. The sensing and communication apparatus is applied to a sensing node and may perform the sensing and communication method provided in the above method embodiments. As shown in FIG. 17, the sensing and communication apparatus 300 includes: a receiving module 301 and a sending module 302.

In some embodiments, the receiving module 301, is configured to receive a first sensing control instruction sent from a sensing function entity in a core network, where the first sensing control instruction is used to instruct the sensing node to perform sensing detection.

In some embodiments, the sending module 302, is configured to send, in response to the first sensing control instruction, a first sensing signal, and acquire first sensing data.

In some embodiments, the sending module 302, is further configured to send the first sensing data to the sensing function entity in the core network.

In some embodiments, the receiving module 301, is further configured to receive a second sensing control instruction sent from an intelligent agent located in an edge network, where the second sensing control instruction is used to instruct the sensing node to perform sensing detection.

In some embodiments, the sending module 302, is further configured to send, in response to the second sensing control instruction, a second sensing signal, and acquire second sensing data.

In some embodiments, the sending module 302, is further configured to send the second sensing data to the intelligent agent.

FIG. 18 is a structural schematic diagram of yet another sensing and communication apparatus provided by the embodiments of the present disclosure. The sensing and communication apparatus is applied to an intelligent agent in an edge network and may perform the sensing and communication method provided in the above method embodiments. As shown in FIG. 18, the sensing and communication apparatus 400 includes: an acquiring module 401, a processing module 402, and a sending module 403.

In some embodiments, the acquiring module 401, is configured to acquire second sensing data from a sensing node.

In some embodiments, the processing module 402, is configured to process the second sensing data based on a second artificial intelligence model, to obtain a second sensing result.

In some embodiments, the sending module 403, is configured to send a second sensing control instruction to the sensing node, where the second sensing control instruction is used to instruct the sensing node to perform sensing detection.

In some embodiments, the sending module 403, is further configured to send at least one of following contents to a core network: a sensing service response message, second sensing data, a second sensing result, or a second artificial intelligence model.

In some embodiments, the acquiring module 401, is further configured to receive at least one of following contents sent from a core network: a sensing service request message, first sensing data, a first sensing result, or a first artificial intelligence model.

In some embodiments, the first sensing result is obtained by processing the first sensing data based on the first artificial intelligence model.

In a case of implementing the functions of the integrated modules mentioned above in the form of hardware, the embodiments of the present disclosure provide a possible structure of a communication apparatus involved in the above embodiments. As shown in FIG. 19, the communication apparatus 500 includes a processor 502 and a bus 504. In some embodiments, the communication apparatus 500 may further include a memory 501; in some embodiments, the communication apparatus 500 may further include a communication interface 503.

In some embodiments, the processor 502 may implement or perform various exemplary logical blocks, modules and circuits described in conjunction with the embodiments of the present disclosure. The processor 502 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 502 may also be a combination that implements computing functions, for example, including a combination of one or more microprocessors, a combination of a digital signal processor (DSP) and a microprocessor, or the like.

In some embodiments, the communication interface 503 is configured to connect with other devices via a communication network. The communication network may be an Ethernet, a radio access network, a wireless local area network (WLAN), or the like.

In some embodiments, the memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 501 may exist independently of the processor 502, and the memory 501 may be connected to the processor 502 via the bus 504 and is used for storing instructions or program codes. The processor 502, when calling and executing the instructions or program codes stored in the memory 501, is capable of implementing the sensing and communication method provided in the embodiments of the present disclosure.

In another possible implementation, the memory 501 may also be integrated with the processor 502.

In some embodiments, the bus 504 may be an extended industry standard architecture (EISA) bus, etc. Buses 504 may be divided into address buses, data buses, control buses, and the like. For ease of representation, only one bold line is used for the representation in FIG. 19, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, upon being executed on a computer, enable the computer to perform the sensing and communication method as described in any embodiment of the above embodiments.

Exemplarily, the above computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices and/or other machine readable storage media for storing information. The term "machine readable storage medium" may include, but is not limited to, a wireless channel and various other media capable of storing, containing, and/or carrying instructions and/or data.

The embodiments of the present disclosure provide a computer program product containing instructions, and the computer program product, upon executing on a computer, enables the computer to perform the sending and communication method as described in any embodiment of the above embodiments.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. A sensing and communication method, applied to a core network, **characterized in that** the core network comprises a sensing function entity and a sensing server; and the method comprises:
receiving first sensing data sent from a sensing node; and
processing, by the sensing function entity, the first sensing data based on a first artificial intelligence model trained by the sensing server, to obtain a first sensing result.

2. The method according to claim 1, wherein before receiving the first sensing data sent from the sensing node, the method further comprises:
in response to a sensing service request message, sending a first sensing control instruction to the sensing node, wherein the first sensing control instruction is used to instruct the sensing node to perform sensing detection.

3. The method according to claim 2, wherein the sensing service request message is sent from an intelligent agent located in an edge network to the core network; or the sensing service request message is generated by an application function network element in the core network.

4. The method according to claim 1, further comprising:
sending at least one of following contents to an intelligent agent located in an edge network: a sensing service request message, a sensing service response message, the first sensing data, the first sensing result, or the first artificial intelligence model.

5. The method according to claim 1, further comprising:
receiving at least one of following contents sent from an intelligent agent located in an edge network: a sensing service request message, a sensing service response message, second sensing data, a second sensing result, or a second artificial intelligence model.

6. The method according to claim 5, wherein the second sensing result is obtained by processing the second sensing data, by the intelligent agent, based on the second artificial intelligence model.

7. The method according to claim 1, wherein the sensing function entity is configured with at least one of following functions: a sensing control function, a sensing management function, an artificial intelligence function, a sensing processing function, or a data preprocessing function.

8. The method according to claim 7, wherein the sensing control function comprises at least one of: selection of a sensing node, management of a sensing resource, management of sensing time, management of an artificial intelligence application, or management of information transmission.

9. The method according to claim 7, wherein the sensing management function comprises at least one of: acquiring a sensing service requirement, authentication for the sensing service requirement, determining a sensing task based on the sensing service requirement, artificial intelligence model fusion, sensing data fusion, or sensing result fusion.

10. The method according to claim 7, wherein the artificial intelligence function comprises at least one of: training an artificial intelligence model, or using the artificial intelligence model.

11. The method according to claim 1, wherein the sensing server is configured with at least one of following functions: a service control function, a data preprocessing function, a data storage function, or a data exposure function.

12. The method according to claim 11, wherein the service control function comprises at least one of: management of an artificial intelligence application, management of model training time, management of the data exposure function, or management of information transmission.

13. The method according to claim 11, wherein the data exposure function is used for providing at least one of sensing data, a sensing result, or an artificial intelligence model externally.

14. A sensing and communication method, applied to a sensing node, **characterized in that** the method comprises:
receiving a first sensing control instruction sent from a sensing function entity in a core network, wherein the first sensing control instruction is used to instruct the sensing node to perform sensing detection;
in response to the first sensing control instruction, sending a first sensing signal, and acquiring first sensing data; and
sending the first sensing data to the sensing function entity in the core network.

15. The method according to claim 14, further comprising:
receiving a second sensing control instruction sent from an intelligent agent located in an edge network, wherein the second sensing control instruction is used to instruct the sensing node to perform sensing detection;
in response to the second sensing control instruction, sending a second sensing signal, and acquiring second sensing data; and
sending the second sensing data to the intelligent agent.

16. A sensing and communication method, applied to an intelligent agent in an edge network, **characterized in that** the method comprises:
acquiring second sensing data from a sensing node; and
processing the second sensing data based on a second artificial intelligence model, to obtain a second sensing result.

17. The method according to claim 16, further comprising:
sending a second sensing control instruction to the sensing node, wherein the second sensing control instruction is used to instruct the sensing node to perform sensing detection.

18. The method according to claim 16, further comprising:
sending at least one of following contents to a core network: a sensing service response message, the second sensing data, the second sensing result, or the second artificial intelligence model.

19. The method according to claim 16, further comprising:
receiving at least one of following contents sent from a core network: a sensing service request message, first sensing data, a first sensing result, or a first artificial intelligence model.

20. The method according to claim 19, wherein the first sensing result is obtained by processing the first sensing data based on the first artificial intelligence model.

21. A sensing and communication system, **characterized in that** the sensing and communication system comprises: a sensing node and a core network, and the core network comprises a sensing function entity and a sensing server;
the sensing node, is configured to provide first sensing data to the core network; and
the core network, is configured to process, by the sensing function entity, the first sensing data based on a first artificial intelligence model trained by the sensing server, to obtain a first sensing result.

22. The system according to claim 21, wherein the sensing and communication system further comprises an intelligent agent located in an edge network;
the sensing node, is further configured to provide second sensing data to the intelligent agent; and
the intelligent agent, is configured to process the second sensing data based on a second artificial intelligence model, to obtain a second sensing result.

23. The system according to claim 22, wherein the intelligent agent is further configured to send at least one of following contents to the core network: a sensing service request message, a sensing service response message, the second sensing data, the second sensing result, or the second artificial intelligence model.

24. The system according to claim 22, wherein
the core network, is further configured to send at least one of following contents to the intelligent agent: a sensing service request message, a sensing service response message, the first sensing data, the first sensing result, or the first artificial intelligence model.

25. A communication apparatus, **characterized by** comprising: a memory and a processor; the memory is coupled with the processor; the memory is configured to store instructions executable by the processor; and the processor, upon executing the instructions, performs the method according to any one of claims 1 to 13, or the method according to claim 14 or 15, or the method according to any one of claims 16 to 20.

26. A computer readable storage medium, **characterized in that** the computer readable storage medium has stored computer instructions thereon, and the computer instructions, upon being executed on a computer, enable the computer to perform the method according to any one of claims 1 to 13, or the method according to claim 14 or 15, or the method according to any one of claims 16 to 20.
